(19) Europäisches Patentamt / European Patent Office / Office européen des brevets

(11) **EP 2 810 331 B1**

(12) **FASCICULE DE BREVET EUROPEEN**

(45) Date de publication et mention
de la délivrance du brevet:
**04.01.2017 Bulletin 2017/01**

(21) Numéro de dépôt: **13701480.9**

(22) Date de dépôt: **30.01.2013**

(51) Int Cl.:
*H01M 8/241* *(2016.01)*    *H01M 8/249* *(2016.01)*
*H01M 8/248* *(2016.01)*    *H01M 8/0297* *(2016.01)*

(86) Numéro de dépôt international:
**PCT/EP2013/051720**

(87) Numéro de publication internationale:
**WO 2013/113717 (08.08.2013 Gazette 2013/32)**

(54) **PROCÉDÉ DE FABRICATION D'UNE PILE À COMBUSTIBLE AMÉLIORÉ**

VERFAHREN ZUR HERSTELLUNG EINER VERBESSERTEN BRENNSTOFFZELLE

METHOD FOR MANUFACTURING AN IMPROVED FUEL CELL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.01.2012 FR 1250836**

(43) Date de publication de la demande:
**10.12.2014 Bulletin 2014/50**

(73) Titulaire: **Areva Stockage d'Energie
13547 Aix-en-Provence (FR)**

(72) Inventeur: **CHAUDRON, Valery
F-04100 Manosque (FR)**

(74) Mandataire: **Lavoix
2, place d'Estienne d'Orves
75441 Paris Cedex 09 (FR)**

(56) Documents cités:
**US-A1- 2003 203 268      US-A1- 2004 202 907
US-B1- 6 218 039**

**Description**

La présente invention concerne un procédé de fabrication d'une pile à combustible pour la génération d'un courant électrique à partir d'une réaction d'oxydoréduction entre un fluide oxydant et un fluide réducteur, la pile comprenant un empilement d'une pluralité de cellules, comprenant chacune :

- un assemblage membrane-électrode comprenant une membrane d'échange d'ions intercalée entre une anode et une cathode,
- un conduit anodique pour la circulation du fluide réducteur le long de l'anode, en contact avec celle-ci, et
- un conduit cathodique pour la circulation du fluide oxydant le long de la cathode, en contact avec celle-ci,

les conduits anodiques étant raccordés fluidiquement les uns aux autres et formant ensemble un compartiment anodique de l'empilement, et les conduits cathodiques étant raccordés fluidiquement les uns aux autres et formant ensemble un compartiment cathodique de l'empilement, chaque compartiment comportant une entrée de fluide et une sortie de fluide.

Une telle pile à combustible est par exemple destinée à alimenter un véhicule automobile, un bateau, ou tout dispositif nécessitant une source d'énergie transportable ou stationnaire.

Le principe de fonctionnement d'une telle pile à combustible repose sur une réaction d'oxydoréduction des fluides oxydant et réducteur. Généralement, des ions positifs sont échangés entre les deux côtés de la membrane de chaque cellule à travers la membrane d'échange d'ions, les charges négatives transitant, sous la forme d'électrons, par un circuit électrique.

En particulier, une telle pile à combustible comprend généralement une pluralité d'empilements de cellules, raccordés électriquement en parallèle. Or, il est important que les empilements présentent tous les mêmes comportements, notamment en termes de puissance délivrée. En effet, dans les cas où les empilements de cellules d'une même pile présentent des comportements hétérogènes, il est commun d'observer des dégradations des cellules de certains empilements, ou que la puissance délivrée par chaque empilement s'aligne sur la puissance délivrée par l'empilement de plus faible rendement.

US 7 582 377 B2 décrit un procédé de fabrication d'empilements de cellules de pile à combustible, dans lequel les cellules fabriquées sont regroupées par lot en fonction des pertes de charge mesurées entre l'entrée et la sortie de fluide des conduits anodique et cathodique de chaque cellule, chaque empilement étant formé de cellules toutes issues d'un même lot. Ainsi, les cellules d'un même empilement présentent des pertes de charge anodiques et cathodiques similaires et, de là, délivrent des niveaux de puissance relativement homogènes.

Un autre procédé de fabrication d'empilements de cellules de pile à combustible est connu de US 2004/202907 A1.

Un objectif de l'invention est de fournir un procédé pour réduire les inhomogénéités de puissance entre empilements de cellules de piles à combustible.

A cet effet, l'invention a pour objet un procédé de fabrication du type précité, caractérisé en ce que le procédé comprend les étapes suivantes :

- constitution de l'empilement ;
- circulation d'un fluide de calibrage dans un ou chaque compartiment de l'empilement, en mesurant un différentiel de pression entre l'entrée et la sortie du ou de chaque compartiment ; et
- application d'un effort de compression croissant sur des extrémités opposées de l'empilement, jusqu'à atteindre un effort de compression final fonction du ou de chaque différentiel de pression mesuré.

Selon des modes de réalisation préférés de l'invention, le procédé comprend également l'une ou plusieurs des caractéristiques suivantes, prise(s) isolément ou suivant toute(s) combinaison(s) techniquement possible(s) :

- l'effort de compression croissant est appliqué en mesurant l'effort de compression, l'effort de compression final étant atteint dès que la condition préférée suivante est vérifiée :

    • l'effort de compression est dans une plage de valeurs prédéterminée, comprise entre un seuil bas d'effort et un seuil haut d'effort, et
    • le différentiel de pression mesuré est supérieur ou égal à une valeur prédéterminée, ou chacun des différentiels de pression mesurés est dans une plage de valeur prédéterminée.

- l'effort de compression final est atteint dès que la condition préférée est vérifiée, ou dès que l'effort de compression est supérieur ou égal au seuil haut d'effort ;
- l'effort de compression croissant est appliqué en mesurant la longueur de l'empilement, l'effort de compression final étant atteint dès que la condition préférée suivante est vérifiée :

    • la longueur de l'empilement est dans une plage de valeurs prédéterminée, comprise entre un seuil bas de longueur et un seuil haut de longueur, et
    • le différentiel de pression mesuré, est supérieur ou égal à une valeur prédéterminée, ou chacun des différentiels de pression mesurés est dans une plage de valeurs prédéterminée.

- l'effort de compression final est atteint dès que la condition préférée précédente est vérifiée, ou dès que la longueur de l'empilement est supérieure ou égale au seuil bas de longueur ;

- l'effort de compression croissant est appliqué en mesurant l'effort de compression et la longueur de l'empilement, l'effort de compression final étant atteint dès que la condition préférée suivante est vérifiée :

  • l'effort de compression est dans une plage de valeurs prédéterminée, comprise entre un seuil bas d'effort et un seuil haut d'effort,
  • la longueur de l'empilement est dans une plage de valeurs prédéterminée, comprise entre un seuil bas de longueur et un seuil haut de longueur, et
  • le différentiel de pression mesuré est supérieur ou égal à une valeur minimale prédéterminée, ou chacun des différentiels de pression mesurés est dans une plage de valeur prédéterminée ;

- l'effort de compression final est atteint dès que la condition préférée précédente est vérifiée, ou dès que l'une des conditions suivantes est vérifiée :

  • l'effort de compression est égal au seuil haut d'effort ; ou
  • la longueur de l'empilement est égale au seuil bas de longueur ; ou
  • le différentiel de pression mesuré est supérieur ou égal à une valeur maximale prédéterminée, ou l'un des différentiels de pression mesurés est égal à un seuil haut de la plage de valeur prédéterminée ;

- l'effort de compression final est atteint dès que le différentiel de pression mesuré est supérieur ou égal à une valeur minimale prédéterminée, ou dès que chacun des différentiels de pression mesurés est dans une plage de valeurs prédéterminée ;
- après que l'effort de compression final a été atteint, l'empilement est maintenu dans un état contraint par l'effort de compression final ; et
- l'effort de compression est appliqué au moyen d'au moins une tige filetée traversant l'empilement et associée à au moins un écrou vissé à une des extrémités de la tige, l'effort de compression étant fonction d'un couple de serrage de l'écrou contre l'empilement.

D'autres caractéristiques et avantages de l'invention apparaîtront à la lecture de la description qui va suivre, donnée uniquement à titre d'exemple et faite en se référant aux dessins annexés, sur lesquels :

- la Figure 1 est une coupe schématique d'une cellule de pile à combustible ;
- la Figure 2 est une vue schématique en élévation d'un empilement de pile à combustible en cours de fabrication, selon un procédé selon l'invention ;
- la Figure 3 est un graphe donnant une relation entre un rapport d'effort appliqué à l'empilement et un rapport de variation de longueur de l'empilement, lors de la mise en oeuvre du procédé selon l'invention ; et
- la Figure 4 est un diagramme de décision d'arrêt de serrage d'un empilement de pile à combustible, dans une mise en oeuvre d'un procédé selon l'invention.

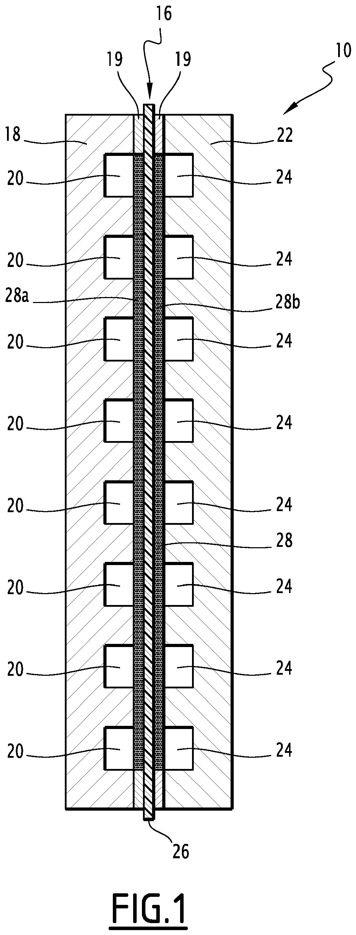

Une cellule 10 de pile à combustible est représentée sur la Figure 1. Elle comprend un assemblage membrane-électrode 16 intercalé entre une plaque anodique 18 et une plaque cathodique 22. Des joints 19 sont également intercalés entre l'assemblage membrane-électrode 16 et chaque plaque anodique 18 et cathodique 22 pour assurer l'étanchéité.

L'assemblage membrane-électrode 16 comprend une membrane 26 d'échange d'ions prise en sandwich entre une anode 28a et une cathode 28b.

La membrane 26 isole électriquement l'anode 28a de la cathode 28b.

La membrane 26 est adaptée pour ne laisser que des ions chargés, de préférence des cations, la traverser. La membrane 26 est généralement une membrane d'échange de protons, adaptée pour ne laisser que des protons la traverser. La membrane 26 est typiquement en matériau polymère.

L'anode 28a et la cathode 28b comprennent chacune un catalyseur, typiquement du platine ou un alliage de platine, pour faciliter la réaction.

La plaque anodique 18 délimite un conduit anodique 20 pour la circulation d'un fluide réducteur le long de la cathode 28b et en contact avec celle-ci. Pour ce faire, la plaque 18 est munie d'au moins un canal ménagé dans la face de la plaque tournée vers l'assemblage membrane-électrode 16 et refermé par ledit assemblage membrane électrode 16. La plaque anodique 18 est formée d'un matériau conducteur électriquement, typiquement du graphite. Le fluide réducteur utilisé est typiquement un fluide comprenant des atomes d'hydrogène, comme par exemple du dihydrogène pur ou dilué.

La plaque cathodique 22 délimite un conduit cathodique 24 pour la circulation d'un fluide oxydant le long de la cathode 28b et en contact avec celle-ci. Pour ce faire, la plaque 22 est munie d'au moins un canal ménagé dans la face de la plaque tournée vers l'assemblage membrane-électrode 16 et refermé par ledit assemblage membrane électrode 16. La plaque cathodique 22 est formée d'un matériau conducteur électriquement, typiquement du graphite. Le fluide oxydant utilisé est typiquement un fluide comprenant du dioxygène, comme par exemple du dioxygène pur ou de l'air.

La membrane 26 sépare les fluides oxydant et réducteur. Elle est disposée entre la plaque anodique 18 et la plaque cathodique 22 de la cellule 10 et isole celles-ci électriquement l'une de l'autre.

L'anode 28a est en contact électrique avec la plaque anodique 18. La cathode 28b et est en contact électrique avec la plaque cathodique 22. C'est au niveau de l'anode 28a qu'a lieu l'oxydation du fluide réducteur et que les électrons et les protons sont générés. Les électrons transitent ensuite via la plaque anodique 18 vers la cathode 28b de cellule 10, ou vers la cathode d'une autre cellule, pour participer à la réduction du fluide oxydant.

Dans un empilement de cellules telles que la cellule 10, la plaque anodique 18 de chaque cellule est en contact avec la plaque cathodique 22 de la cellule voisine. Les plaques anodique et cathodique 18, 22 assurent ainsi le transfert des électrons du fluide réducteur circulant dans une cellule vers le fluide oxydant circulant dans une autre cellule. Les plaques anodique 18 et cathodique 22 de deux cellules voisines d'un même empilement sont généralement venues de matière et forment ensemble une plaque bipolaire.

De préférence, pour chaque paire de cellules adjacentes du même empilement, un circuit fluidique de refroidissement (non représenté) est formé à l'interface entre les plaques anodique 18 et cathodique 22 desdites cellules.

Chaque joint 19 est pincé entre la membrane 26 et l'une des plaques anodique 18 et cathodique 22. Chaque joint 19 est annulaire. Il s'étend le long la membrane 26, autour de la cathode 28b, respectivement autour de l'anode 28a.

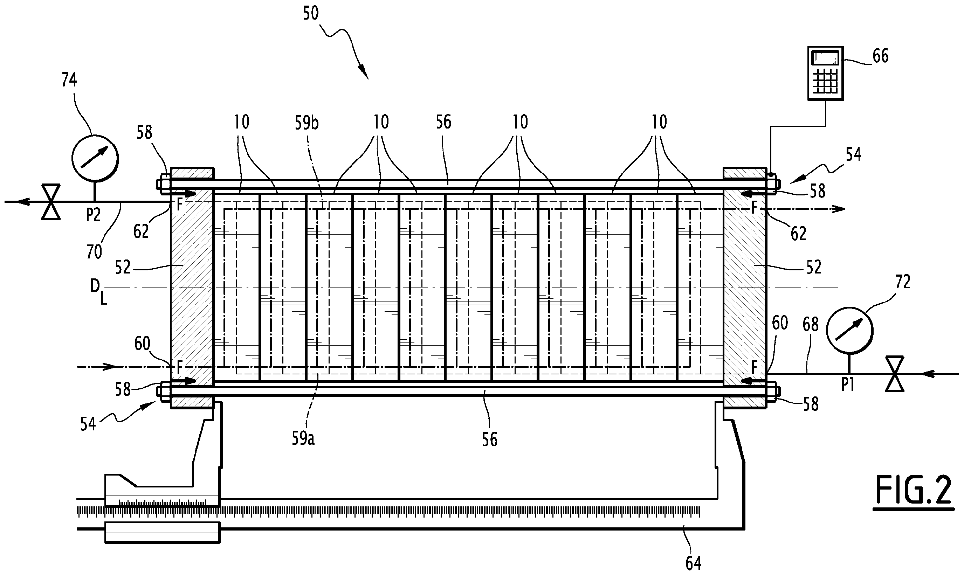

Un empilement 50 de cellules 10 est représenté sur la Figure 2. Les cellules 10 sont empilées les unes sur les autres le long d'une direction longitudinale $D_L$ de l'empilement 50.

L'empilement 50 comprend, outre les cellules 10, une plaque de serrage 52 à chaque extrémité longitudinale de l'empilement 50, et une pluralité de boulons de serrage 54 (sur la Figure 2, seuls deux boulons 54 sont représentés, mais l'empilement 50 peut en comprendre davantage) reliant chacun les plaques de serrage 52 l'une à l'autre.

Chaque boulon de serrage 54 comprend une tige fileté 56 et deux écrous d'extrémité 58. La tige fileté 56 s'étend longitudinalement le long de l'empilement 50, et à travers chaque plaque de serrage 52. Dans l'exemple représenté, aucune tige fileté 56 ne traverse de cellule 10 de l'empilement 50. En variante, au moins une tige filetée traverse les cellules 10.

Chaque écrou 58 est vissé à une extrémité longitudinale de la tige fileté 56 et est serré contre une plaque de serrage 52. Chaque écrou 58 applique une force de compression finale F sur l'empilement 50.

L'empilement 50 est ainsi maintenu dans un état contraint par un effort de compression final, grâce à la coopération entre les plaques de serrage 52 et les boulons de serrage 54.

Dans l'empilement 50, les conduits anodiques 20 des cellules 10 sont raccordés fluidiquement les uns aux autres et forment ensemble un compartiment anodique 59a de l'empilement 50, et les conduits cathodiques 22 des cellules 10 sont raccordés fluidiquement les uns aux autres et forment ensemble un compartiment cathodique 59b de l'empilement 50. Sur la Figure 2, le compartiment anodique 59a est représenté schématiquement en traits pointillés et le compartiment cathodique 59b est représenté schématiquement en traits mixtes.

Chaque compartiment 59a, 59b comprend une entrée 60 et une sortie 62 de fluide. Chaque entrée 60 est destinée à être branchée fluidiquement à un conduit d'amenée de fluide et chaque sortie 62 est destinée à être branchée fluidiquement à un conduit d'évacuation de fluide. Dans l'exemple représenté, chacune des entrées 60 et sorties 62 de fluide débouche dans une plaque de serrage 52. En variante, au moins une desdites entrées 60 et sorties 62 débouche dans une cellule 10 d'extrémité, c'est-à-dire dans une des cellules 10 formant une extrémité de l'empilement 50.

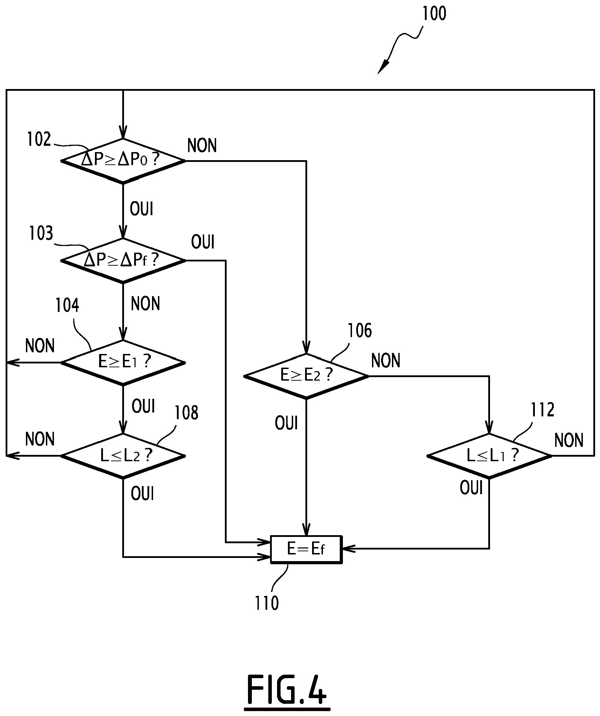

Le procédé de fabrication de l'empilement 50 va maintenant être décrit, en regard des Figures 2 à 4.

De manière connue, un dispositif 64 de mesure d'une longueur L de l'empilement 50 dans sa direction longitudinale $D_L$ et un dispositif 66 de mesure d'un effort de compression E appliqué aux extrémités longitudinales de l'empilement 50 sont fournis.

De préférence, comme représenté, la longueur L est mesurée entre les plaques de serrage 52. En variante, la longueur L inclus l'épaisseur des plaques de serrage 52. On notera que, les plaques de serrage 52 étant incompressibles, ces mesures sont équivalentes.

Le dispositif de mesure d'effort 66 est par exemple adapté pour mesurer un couple de serrage de chaque écrou 58 contre les plaques de serrage 52 et pour en déduire l'effort de compression global E appliqué sur l'empilement 50.

Dans un premier temps, on définit une valeur théorique $E_{th}$ d'effort de compression à appliquer à l'empilement 50, et une valeur théorique $\Delta L_{th}$ de variation de longueur de l'empilement 50 à atteindre pour obtenir un fonctionnement optimal de l'empilement 50, notamment en termes d'étanchéité, de contact électrique entre les cellules 10, et d'écoulement de fluides. La valeur théorique de variation de longueur $\Delta L_{th}$ est définie comme étant la différence entre la longueur initiale de l'empilement 50 lorsqu'aucun effort de compression ne lui est appliqué, et la longueur finale théorique de l'empilement 50 lorsque la valeur théorique d'effort de compression $E_{th}$ lui est appliqué.

Ces valeurs théoriques $E_{th}$, $\Delta L_{th}$ sont déterminées par le calcul et validées expérimentalement, de façon à obtenir :

- un écrasement compris entre 10% et 40% des assemblages membrane électrode 16 et des joints 19, et/ou

- une pression, appliquée sur les assemblages membrane-électrode 16 et les joints 19, comprise entre 0,5 et 2 N/mm².

De façon générale, la valeur théorique d'effort de compression $E_{th}$ est donnée par la formule suivante :

$$E_{th} = \sum_i P_i \times S_i + \varepsilon$$

où i est un indice associé à un composant déformable, par exemple un joint ou l'assemblage membrane-électrode, d'une cellule 10 de l'empilement 50, la somme $\Sigma$ s'appliquant aux seuls composants i d'une unique cellule 10, $P_i$ est la pression théorique à appliquer sur ce composant i pour un fonctionnement optimal du composant, $S_i$ est la surface du composant i, perpendiculairement à la direction longitudinale $D_L$, et $\varepsilon$ est la somme des pertes mécaniques irréversibles dans toutes les cellules 10 de l'empilement 50.

L'empilement 50 est ensuite constitué. Les plaques anodiques 18 et les plaques cathodiques 22 sont disposées en alternance les unes des autres avec, entre la plaque anodique 18 et la plaque cathodique 22 de chaque cellule 10, un assemblage membrane-électrode 16; en variante, des plaques bipolaires sont disposées en alternance des assemblages membrane-électrode 16. Les plaques de serrage 52 sont appliquées aux extrémités de l'empilement 50 et sont reliées au moyen des tiges filetées 56. Les écrous 58 sont vissés aux extrémités de chaque tige 56 et chaque écrou 58 est partiellement serré contre une plaque de serrage 52. Chaque écrou 58 est serré de façon à éviter les fuites dans chaque compartiment anodique 59a et cathodique 59b. De préférence, chaque écrou 58 est serré de façon à ce que l'effort de compression global E soit compris entre 20 et 60% de la valeur théorique d'effort de compression $E_{th}$, et que la variation $\Delta L$ de longueur de l'empilement 50 soit comprise entre 50 et 80% de la valeur théorique de variation de longueur $\Delta L_{th}$.

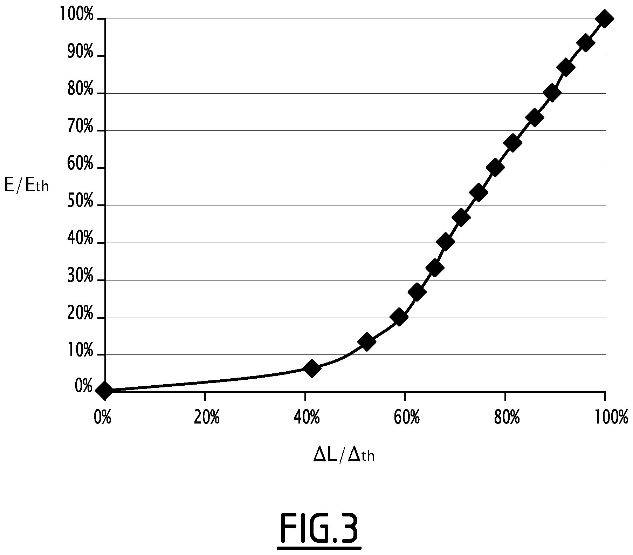

Un exemple donnant la relation entre le rapport $E/E_{th}$ d'une part et $\Delta L/\Delta L_{th}$ d'autre part est donné sur la Figure 3.

Une fois l'empilement 50 constitué, c'est-à-dire une fois que chaque écrou 58 est serré de façon à éviter les fuites dans chaque compartiment anodique 59a et cathodique 59b, l'entrée 60 et la sortie 62 du compartiment anodique 59a sont branchées fluidiquement, respectivement, à un conduit 68 d'amenée de fluide de calibrage, et à un conduit 70 d'évacuation de fluide de calibrage. Le conduit d'amenée 68 est par exemple relié fluidiquement à un réservoir de fluide de calibrage (non représenté).

Le fluide de calibrage utilisé est un gaz inerte.

Chacun des conduits d'amenée 68 et d'évacuation 70 est équipé d'un dispositif de mesure de pression, respectivement un capteur de pression amont 72 et un capteur de pression aval 74. Le capteur de pression amont 72 est ainsi adapté pour mesurer une pression amont P1 de fluide à l'entrée 60 du compartiment anodique 59a et le capteur de pression aval 74 est adapté pour mesurer une pression aval P2 de fluide à la sortie 62 du compartiment anodique 59a.

Chaque capteur de pression 72, 74 est par exemple un manomètre ou un dispositif de mesure de différentiel de pression.

Une fois les conduits d'amenée 68 et d'évacuation 70 branchés à l'empilement 50, le fluide de calibrage est injecté dans le compartiment anodique 59a. Il circule dans le compartiment 59a suivant un débit calibré et stabilisé prédéfini. Un différentiel de pression $\Delta P$ est mesuré entre la pression amont P1 et la pression aval P2.

Simultanément, le couple de serrage des écrous 58 est progressivement augmenté de manière à augmenter progressivement l'effort de compression E appliqué sur les extrémités longitudinales de l'empilement 50. La longueur L de l'empilement 50 et l'effort de compression appliqué E sont également mesurés.

L'effort E est alors augmenté jusqu'à atteindre un effort de compression final $E_f$, fonction du différentiel de pression $\Delta P$. On considère que l'effort final $E_f$ est atteint dès que l'une des conditions alternatives suivantes est vérifiée :

- l'effort de compression E est dans une plage de valeurs prédéterminée [$E_1$, $E_2$], comprise entre un seuil bas d'effort $E_1$ et un seuil haut d'effort $E_2$, par exemple entre 80 et 120% de la valeur théorique d'effort de compression $E_{th}$, la longueur L de l'empilement 50 est dans une plage de valeurs prédéterminée [$L_1$, $L_2$], comprise entre un seuil bas de longueur $L_1$ et un seuil haut de longueur $L_2$, par exemple de sorte que la variation de longueur $\Delta L$ soit comprise entre 90 et 110% de la valeur théorique de variation de longueur $\Delta L_{th}$, et le différentiel de pression $\Delta P$ est supérieur ou égal à une valeur minimale prédéterminée $\Delta P_0$, ou
- le différentiel de pression $\Delta P$ est supérieur à une valeur maximale prédéterminée $\Delta P_f$, ou
- l'effort de compression E est supérieur ou égal au seuil haut d'effort $E_2$, ou
- la longueur L de l'empilement 50 est supérieure ou égale au seuil bas de longueur $L_1$.

Le serrage des écrous 58 est alors stoppé et l'empilement 50 est maintenu dans un état contraint par l'effort de compression final $E_f$, grâce à la coopération de chaque boulon 54 avec les plaques de serrage 52.

En particulier, un diagramme 100 de décision de l'arrêt du serrage de l'empilement 50 est représenté sur la Figure 3.

Dans une étape initiale 102, on regarde si le différentiel de pression mesuré $\Delta P$ est supérieur ou égal à la valeur prédéterminée $\Delta P_0$. Si cette condition est vérifiée, on passe à une étape 103, sinon on passe à une étape 106.

Dans l'étape 103, on regarde si le différentiel de pression mesuré $\Delta P$ est supérieur ou égal à la valeur maximale prédéterminée $\Delta P_f$. Si cette condition est vérifiée, on passe à une étape finale 110, sinon on passe à une étape 104.

Dans l'étape 104, on regarde si l'effort mesuré E est supérieur ou égal au seuil bas $E_1$. Si cette condition est vérifiée, on passe à une étape 108, sinon on revient à l'étape initiale 102.

Dans l'étape 108, on regarde si la longueur L mesurée est inférieure ou égale au seuil haut $L_2$. Si cette condition est vérifiée, on passe à l'étape finale 110, sinon on revient à l'étape initiale 102.

Dans l'étape 106, on regarde si l'effort mesuré E est supérieur ou égal au seuil haut $E_2$. Si cette condition est vérifiée, on passe à l'étape finale 110, sinon on passe à une étape 112.

Dans l'étape 112, on regarde si la longueur L mesurée est inférieure ou égale au seuil bas $L_1$. Si cette condition est vérifiée, on passe à l'étape finale 110, sinon on revient à l'étape initiale 102.

Dans l'étape finale 110, l'effort de compression final $E_f$ est atteint. Le serrage des écrous 58 est alors arrêté et l'empilement 50 est maintenu dans un état contraint par l'effort de compression final $E_f$.

La fabrication de l'empilement 50 est alors achevée.

De préférence, l'empilement 50 subit ultérieurement un contrôle de qualité et, s'il ne satisfait pas à l'une des conditions suivantes :

- le différentiel de pression $\Delta P$ est compris entre $\Delta P_0$ et $\Delta P_f$,
- l'effort de compression E est dans la plage de valeurs prédéterminée $[E_1, E_2]$, et
- la longueur L est dans la plage de valeurs prédéterminée $[L_1, L_2]$, l'empilement 50 est mis au rebut.

Grâce à l'invention, il est possible d'obtenir un comportement relativement homogène des empilements fabriqués.

En outre, la longueur de l'empilement et l'effort de compression appliqué sont maintenus chacun dans une plage donnée, de façon à ce que l'empilement réponde à certains critères mécaniques, par exemple en terme de déformation et de résistance aux chocs, et ne soit pas fragilisé par l'application d'un effort de compression excessif. De la même manière, le critère de perte de charge est maintenu dans une plage donnée, pour satisfaire au critère fluidique de circulation des réactifs dans la pile à combustible, indispensable à l'obtention d'une performance optimale et d'un fonctionnement stable et durable.

Dans l'exemple décrit ci-dessus, le fluide de calibrage circule dans le seul compartiment anodique 59a, et seul le différentiel de pression $\Delta P$ entre l'entrée 60 et la sortie 62 du compartiment anodique 59a est mesuré. En variante, le fluide de calibrage est injecté dans le seul compartiment cathodique 59b, ou simultanément dans les compartiments anodique 59a et cathodique 59b, un différentiel de pression $\Delta P_a$, $\Delta P_c$ étant alors mesuré pour chaque compartiment 59a, 59b. En variante encore, des fluides calibrages différents peuvent être utilisés pour le compartiment anodique 59a et pour le compartiment cathodique 59b.

Dans le cas où un fluide de calibrage circule dans chacun des compartiments anodique 59a et cathodique 59b, l'effort de compression final $E_f$ est atteint dès que chacun des effort de compression E, longueur L de l'empilement 50 et différentiels de pression mesurés $\Delta P_a$, $\Delta P_c$ est dans une plage de valeur prédéterminée, ou que dès que l'un des différentiels de pression $\Delta P_a$, $\Delta P_c$ est égal à un seuil haut $\Delta P_f$ de sa plage de valeur prédéterminée, ou dès que la longueur L, respectivement l'effort E, est égal au seuil bas $L_1$, respectivement au seuil haut $E_2$, de sa plage de valeur prédéterminée $[E_1, E_2]$, $[L_1, L_2]$.

Dans l'exemple évoqué précédemment, l'empilement 50 est serré au moyen des boulons de serrage 54. Cependant, d'autres moyens peuvent être envisagés pour serrer l'empilement 50 et le maintenir dans un état contraint ; par exemple, l'empilement 50 peut être comprimé dans une presse ou au moyen d'une combinaison de différents dispositifs, comme une presse et des boulons de serrage.

Dans l'exemple décrit ci-dessus, à la fois l'effort de compression E appliqué sur l'empilement 50, et la longueur L de l'empilement 50, sont mesurés. En variante, un seul des effort E et longueur L est mesuré, ou aucune de ces grandeurs n'est mesurée, l'effort de compression final $E_f$ dépendant alors exclusivement du différentiel de pression $\Delta P$.

## Revendications

**1.** Procédé de fabrication d'une pile à combustible pour la génération d'un courant électrique à partir d'une réaction d'oxydoréduction entre un fluide oxydant et un fluide réducteur, la pile comprenant un empilement (50) d'une pluralité de cellules (10), comprenant chacune :

    - un assemblage membrane-électrode (16) comprenant une membrane d'échange d'ions (26) intercalée entre une anode (28a) et une cathode (28b),
    - un conduit anodique (20) pour la circulation du fluide réducteur le long de l'anode (28a), en contact avec celle-ci, et
    - un conduit cathodique (24) pour la circulation du fluide oxydant le long de la cathode (28b), en contact avec celle-ci,

les conduits anodiques (20) étant raccordés fluidiquement les uns aux autres et formant ensemble un compartiment anodique (59a) de l'empilement (50), et les conduits cathodiques (24) étant raccordés fluidiquement les uns aux autres et formant ensemble un compartiment cathodique (59b) de l'empilement (50), chaque compartiment (59a, 59b) comportant une entrée de fluide (60) et une sortie de fluide (62), le procédé comprenant les étapes suivantes :

- constitution de l'empilement (50) ;
- circulation d'un fluide dans un ou chaque compartiment (59a, 59b) de l'empilement (50), en mesurant un différentiel de pression ($\Delta P$) entre l'entrée (60) et la sortie (62) du ou de chaque compartiment (59a, 59b) ; et
- application d'un effort de compression (E) croissant sur des extrémités opposées de l'empilement (50), jusqu'à atteindre un effort de compression final ($E_f$) fonction du ou de chaque différentiel de pression ($\Delta P$) mesuré.

**caractérisé en ce que** le fluide circulant dans le ou chaque compartiment (59a, 59b) de l'empilement (50) est un fluide de calibrage constitué par un gaz inerte.

2. Procédé de fabrication selon la revendication 1, dans lequel l'effort de compression croissant (E) est appliqué en mesurant l'effort de compression (E), l'effort de compression final ($E_f$) étant atteint dès que la condition préférée suivante est vérifiée :

- l'effort de compression (E) est dans une plage de valeurs prédéterminée ($[E_1, E_2]$), comprise entre un seuil bas d'effort ($E_1$) et un seuil haut d'effort ($E_2$), et
- le différentiel de pression mesuré ($\Delta P$) est supérieur ou égal à une valeur prédéterminée ($\Delta P_0$), ou chacun des différentiels de pression mesurés ($\Delta P_a$, $\Delta P_c$) est dans une plage de valeur prédéterminée.

3. Procédé de fabrication selon la revendication 2, dans lequel l'effort de compression final ($E_f$) est atteint dès que la condition préférée est vérifiée, ou dès que l'effort de compression (E) est supérieur ou égal au seuil haut d'effort ($E_2$).

4. Procédé de fabrication selon l'une quelconque des revendications 1 à 3, dans lequel l'effort de compression croissant (E) est appliqué en mesurant la longueur (L) de l'empilement (50), l'effort de compression final ($E_f$) étant atteint dès que la condition préférée suivante est vérifiée :

- la longueur (L) de l'empilement (50) est dans une plage de valeurs prédéterminée ($[L_1, L_2]$), comprise entre un seuil bas de longueur ($L_1$) et un seuil haut de longueur ($L_2$), et
- le différentiel de pression mesuré ($\Delta P$), est supérieur ou égal à une valeur prédéterminée, ou chacun des différentiels de pression mesurés ($\Delta P_a$, $\Delta P_c$) est dans une plage de valeurs prédéterminée.

5. Procédé de fabrication selon la revendication 4, dans lequel l'effort de compression final ($E_f$) est atteint dès que la condition préférée est vérifiée, ou dès que la longueur (L) de l'empilement (50) est supérieure ou égale au seuil bas de longueur ($L_1$).

6. Procédé de fabrication selon la revendication 1, dans lequel l'effort de compression croissant (E) est appliqué en mesurant l'effort de compression (E) et la longueur (L) de l'empilement (50), l'effort de compression final ($E_f$) étant atteint dès que la condition préférée suivante est vérifiée :

- l'effort de compression (E) est dans une plage de valeurs prédéterminée ($[E_1, E_2]$), comprise entre un seuil bas d'effort ($E_1$) et un seuil haut d'effort ($E_2$),
- la longueur de l'empilement est dans une plage de valeurs prédéterminée ($[L_1, L_2]$), comprise entre un seuil bas de longueur ($L_1$) et un seuil haut de longueur ($L_2$), et
- le différentiel de pression mesuré ($\Delta P$) est supérieur ou égal à une valeur minimale prédéterminée ($\Delta P_0$), ou chacun des différentiels de pression mesurés ($\Delta P_a$, $\Delta P_c$) est dans une plage de valeur prédéterminée.

7. Procédé de fabrication selon la revendication 6, dans lequel l'effort de compression final ($E_f$) est atteint dès que la condition préférée est vérifiée, ou dès que l'une des conditions suivantes est vérifiée :

- l'effort de compression (E) est égal au seuil haut d'effort ($E_2$) ; ou
- la longueur (L) de l'empilement (50) est égale au seuil bas de longueur ($L_1$) ; ou
- le différentiel de pression mesuré ($\Delta P$) est supérieur ou égal à une valeur maximale prédéterminée ($\Delta P_f$), ou l'un des différentiels de pression mesurés ($\Delta P_a$, $\Delta P_c$) est égal à un seuil haut de la plage de valeur prédéterminée.

8. Procédé de fabrication selon la revendication 1, dans lequel l'effort de compression final est atteint dès que le différentiel de pression mesuré ($\Delta P$) est supérieur ou égal à une valeur minimale prédéterminée ($\Delta P_0$), ou dès que chacun des différentiels de pression mesurés ($\Delta P_1$, $\Delta P_2$) est dans une plage de valeurs prédéterminée.

9. Procédé de fabrication selon l'une quelconque des revendications précédentes, dans lequel, après que l'effort de compression final ($E_f$) a été atteint, l'empilement (50) est maintenu dans un état contraint par l'effort de compression final ($E_f$).

**10.** Procédé de fabrication selon l'une quelconque des revendications précédentes, dans lequel l'effort de compression (E) est appliqué au moyen d'au moins une tige filetée (56) traversant l'empilement (50) et associée à au moins un écrou (58) vissé à une des extrémités de la tige (56), l'effort de compression (E) étant fonction d'un couple de serrage de l'écrou (58) contre l'empilement (50).

**Patentansprüche**

**1.** Verfahren zum Herstellen einer Brennstoffzelle zur Erzeugung eines elektrischen Stroms aus einer Redox-Reaktion zwischen einem oxidierenden Fluid und einem Reduktionsfluid, wobei die Zelle eine Stapelung (50) mehrerer Zellen (10) umfasst, wovon jede umfasst:

- eine Membran-Elektroden-Anordnung (16) mit einer Ionenaustauschmembran (26), die zwischen einer Anode (28a) und einer Kathode (28b) eingesetzt ist,
- eine Anodenleitung (20) zur Zirkulation des Reduktionsfluids entlang der Anode (28a) und in Kontakt mit dieser, und
- eine Kathodenleitung (24) zur Zirkulation des Reduktionsfluids entlang der Kathode (28b) und in Kontakt mit dieser,

wobei die Anodenleitungen (20) fluidtechnisch miteinander verbunden sind und zusammen eine Anodenkammer (59a) der Stapelung (50) bilden, und die Kathodenleitungen (24) fluidtechnisch miteinander verbunden sind und zusammen eine Kathodenkammer (59b) der Stapelung (50) bilden, wobei jede Kammer (59a, 59b) einen Fluideinlass (60) und einen Fluidauslass (62) hat, wobei das Verfahren die folgenden Schritte umfasst:

- Bilden der Stapelung (50);
- Zirkulation eines Fluids in einer oder jeder Kammer (59a, 59b) der Stapelung (50), wobei ein Druckunterschied ($\Delta P$) zwischen dem Einlass (60) und dem Auslass (62) der oder jeder Kammer (59a, 59b) gemessen wird; und
- Anlegen einer zunehmenden Druckkraft (E) an entgegengesetzte Enden der Stapelung (50), bis eine endgültige Druckkraft ($E_f$) in Abhängigkeit von dem oder jedem gemessenen Druckunterschied ($\Delta P$) erreicht ist,

**dadurch gekennzeichnet, dass** das in der oder jeder Kammer (59a, 59b) der Stapelung (50) zirkulierende Fluid ein Kalibrierungsfluid ist, das aus einem Inertgas besteht.

**2.** Herstellungsverfahren nach Anspruch 1, wobei die zunehmende Druckkraft (E) angelegt und dabei die Druckkraft (E) gemessen wird, wobei die endgültige Druckkraft ($E_f$) erreicht ist, sobald die folgende bevorzugte Bedingung nachgewiesen ist:

- die Druckkraft (E) liegt in einem vorbestimmten Wertebereich ($[E_1, E_2]$), der sich zwischen einem unteren Kraftschwellenwert ($E_1$) und einem oberen Kraftschwellenwert ($E_2$) ansiedelt, und
- der gemessene Druckunterschied ($\Delta P$) ist größer oder gleich einem vorbestimmten Wert ($\Delta P_0$) oder jeder der gemessenen Druckunterschiede ($\Delta P_a$, $\Delta P_c$) liegt in einem vorbestimmten Wertebereich.

**3.** Herstellungsverfahren nach Anspruch 2, wobei die endgültige Druckkraft ($E_f$) erreicht ist, sobald die bevorzugte Bedingung nachgewiesen ist oder sobald die Druckkraft (E) größer oder gleich dem oberen Druckkraftschwellenwert ($E_2$) ist.

**4.** Herstellungsverfahren nach einem der Ansprüche 1 bis 3, wobei die zunehmende Druckkraft (E) angelegt und dabei die Länge (L) der Stapelung (50) gemessen wird, wobei die endgültige Druckkraft ($E_f$) erreicht ist, sobald die folgende bevorzugte Bedingung nachgewiesen ist:

- die Länge (L) der Stapelung (50) liegt in einem vorbestimmten Wertebereich ($[L_1, L_2]$), der sich zwischen einem unteren Längenschwellenwert ($L_1$) und einem oberen Längenschwellenwert ($L_2$) ansiedelt, und
- der gemessene Druckunterschied ($\Delta P$) ist größer oder gleich einem vorbestimmten Wert oder jeder der gemessenen Druckunterschiede ($\Delta P_a$, $\Delta P_c$) liegt in einem vorbestimmten Wertebereich.

**5.** Herstellungsverfahren nach Anspruch 4, wobei die endgültige Druckkraft ($E_f$) erreicht ist, sobald die bevorzugte Bedingung nachgewiesen ist oder sobald die Länge (L) der Stapelung (50) größer oder gleich dem unteren Längenschwellenwert ($L_1$) ist.

**6.** Herstellungsverfahren nach Anspruch 1, wobei die zunehmende Druckkraft (E) angelegt und dabei die Druckkraft (E) und die Länge (L) der Stapelung (50) gemessen wird, wobei die endgültige Druckkraft ($E_f$) erreicht ist, sobald die folgende bevorzugte Bedingung nachgewiesen ist:

- die Druckkraft (E) liegt in einem vorbestimmten Wertebereich ($[E_1, E_2]$), der sich zwischen einem unteren Kraftschwellenwert ($E_1$) und einem oberen Kraftschwellenwert ($E_2$) ansiedelt,
- die Länge der Stapelung liegt in einem vorbestimmten Wertebereich ($[L_1, L_2]$), der sich zwi-

schen einem unteren Längenschwellenwert ($L_1$) und einem oberen Längenschwellenwert ($L_2$) ansiedelt, und
- der gemessene Druckunterschied ($\Delta P$) ist größer oder gleich einem vorbestimmten Mindestwert ($\Delta P_0$) oder jeder der gemessenen Druckunterschiede ($\Delta P_a$, $\Delta P_c$) liegt in einem vorbestimmten Wertebereich.

7. Herstellungsverfahren nach Anspruch 6, wobei die endgültige Druckkraft ($E_f$) erreicht ist, sobald die bevorzugte Bedingung nachgewiesen ist oder sobald eine der folgenden Bedingungen nachgewiesen ist:

- die Druckkraft ($E$) ist gleich dem oberen Kraftschwellenwert ($E_2$); oder
- die Länge ($L$) der Stapelung (50) ist gleich dem unteren Längenschwellenwert ($L_1$); oder
- der gemessene Druckunterschied ($\Delta P$) ist größer oder gleich einem vorbestimmten Höchstwert ($\Delta P_1$) oder einer der gemessenen Druckunterschiede ($\Delta P_a$, $\Delta P_c$) ist gleich einem oberen Schwellenwert des vorbestimmten Wertebereichs.

8. Herstellungsverfahren nach Anspruch 1, wobei die endgültige Druckkraft erreicht ist, sobald der gemessene Druckunterschied ($\Delta P$) größer oder gleich einem vorbestimmten Mindestwert ($\Delta P_0$) ist oder sobald jeder der gemessenen Druckunterschiede ($\Delta P_1$, $\Delta P_2$) in einem vorbestimmten Wertebereich liegt.

9. Herstellungsverfahren nach einem der vorhergehenden Ansprüche, wobei, nachdem die endgültige Druckkraft ($E_f$) erreicht wurde, die Stapelung (50) durch die endgültige Druckkraft ($E_f$) in einem gespannten Zustand gehalten wird.

10. Herstellungsverfahren nach einem der vorhergehenden Ansprüche, wobei die Druckkraft ($E$) mittels mindestens eines Gewindestifts (56) angelegt wird, der die Stapelung (50) durchquert und mindestens einer Schraubenmutter (58) zugeordnet ist, die auf eines der Enden des Stifts (56) aufgedreht ist, wobei die Druckkraft ($E$) von einem auf die Stapelung (50) wirkenden Anzugsdrehmoment der Schraubenmutter (58) abhängt.

**Claims**

1. Method for manufacturing a fuel battery for generating an electric current from a redox reaction between an oxidising fluid and a reducing fluid, the battery comprising a stack (50) of a plurality of cells (10), each comprising:

- a membrane-electrode assembly (16) comprising an ion exchange membrane (26) interposed between an anode (28a) and a cathode (28b),
- an anode duct (20) for circulating reducing fluid along the anode (28a) in contact therewith, and
- a cathode duct (24) for circulating oxidising fluid along the cathode (28b) in contact therewith,

the anode ducts (20) being fluidically interconnected and together forming an anode compartment (59a) of the stack (50), and the cathode ducts (24) being fluidically interconnected and together forming a cathode compartment (59b) of the stack (50), each compartment (59a, 59b) comprising a fluid inlet (60) and a fluid outlet (62), the method comprising the following steps:

- forming the stack (50);
- circulating a fluid in a or each compartment (59a, 59b) of the stack (50) whilst measuring a pressure differential ($\Delta P$) between the inlet (60) and outlet (62) of the or each compartment (59a, 59b); and
- applying an increasing compressive stress ($E$) to the opposite ends of the stack (50), until a final compressive stress ($E_f$) is reached which is a function of the or each measured pressure differential ($\Delta P$);

**characterised in that** the fluid circulating in the or each compartment (59a, 59b) of the stack (50) is a calibrating fluid in the form of an inert gas.

2. Method of manufacture according to claim 1, wherein the increasing compressive stress ($E$) is applied by measuring the compressive stress ($E$), the final compressive stress ($E_f$) being reached once the preferred one of the following conditions is established:

- the compressive stress ($E$) is within a predetermined range of values ([$E_1$, $E_2$]), between a lower stress threshold ($E_1$) and an upper stress threshold ($E_2$), and
- the measured pressure differential ($\Delta P$ is greater than or equal to a predetermined value ($\Delta P_0$) or each of the measured pressure differentials ($\Delta P_a$, $\Delta P_c$) is within a predetermined range of values.

3. Method of manufacture according to claim 2, wherein the final compressive stress ($E_f$) is reached once the preferred condition is established or once the compressive stress ($E$) is greater than or equal to the upper stress threshold ($E_2$).

4. Method of manufacture according to any of claims 1 to 3, wherein the increasing compressive stress ($E$) is applied by measuring the length ($L$) of the stack (50), the final compressive stress ($E_f$) being reached once the preferred one of the following conditions is established:

- the length (L) of the stack (50) is within a predetermined range of values ($[L_1, L_2]$), between a lower length threshold ($L_1$) and an upper length threshold ($L_2$), and
- the measured pressure differential ($\Delta P$) is greater than or equal to a predetermined value or each of the measured pressure differentials ($\Delta P_a$, $\Delta P_c$) is within a predetermined range of values.

5. Method of manufacture according to claim 4, wherein the final compressive stress ($E_f$) is reached once the preferred condition is established or once the length (L) of the stack (50) is greater than or equal to the lower length threshold ($L_1$).

6. Method of manufacture according to claim 1, wherein the increasing compressive stress (E) is applied by measuring the compressive stress (E) and the length (L) of the stack (50), the final compressive stress ($E_f$) being reached once the preferred one of the following conditions is established:

- the compressive stress (E) is within a predetermined range of values ($[E_1, E_2]$), between a lower stress threshold ($E_1$) and an upper stress threshold ($E_2$),
- the length of the stack is within a predetermined range of values ($[L_1, L_2]$), between a lower length threshold ($L_1$) and an upper length threshold ($L_2$), and
- the measured pressure differential ($\Delta P$) is greater than or equal to a predetermined minimum value ($\Delta P_0$) or each of the measured pressure differentials ($\Delta P_a$, $\Delta P_c$) is within a predetermined range of values.

7. Method of manufacture according to claim 6, wherein the final compressive stress ($E_f$) is reached once the preferred condition is established or once one of the following conditions is established:

- the compressive stress (E) is equal to the upper stress threshold ($E_2$); or
- the length (L) of the stack (50) is equal to the lower length threshold ($L_1$); or
- the measured pressure differential ($\Delta P$) is greater than or equal to a predetermined maximum value ($\Delta P_f$), or one of the measured pressure differentials ($\Delta P_a$, $\Delta P_c$) is equal to an upper threshold of the predetermined range of values;

8. Method of manufacture according to claim 1, wherein the final compressive stress is reached once the measured pressure differential ($\Delta P$) is greater than or equal to a predetermined minimum value ($\Delta P_0$) or once each of the measured pressure differentials ($\Delta P_1$, $\Delta P_2$) is within a predetermined range of values.

9. Method of manufacture according to any of the preceding claims, wherein, after the final compressive stress ($E_f$) has been reached, the stack (50) is kept in a pressured state by the final compressive stress ($E_f$).

10. Method of manufacture according to any of the preceding claims, wherein the compressive stress (E) is applied by means of at least one threaded rod (56) passing through the stack (50) and connected to at least one threaded nut (58) at one of the ends of the rod (56), the compressive stress (E) being a function of a clamping torque of the nut (58) against the stack (50).

FIG.1

FIG.2

EP 2 810 331 B1

## FIG.3

100

102 — $\Delta P \geq \Delta P_0$ ? — NON

OUI

103 — $\Delta P \geq \Delta P_f$ ? — OUI

NON

104 — $E \geq E_1$ ? — NON

OUI

108 — $L \leq L_2$ ? — NON

OUI

106 — $E \geq E_2$ ? — NON

OUI

112 — $L \leq L_1$ ? — NON

OUI

$E = E_f$

110

FIG.4

**EP 2 810 331 B1**

**RÉFÉRENCES CITÉES DANS LA DESCRIPTION**

**Documents brevets cités dans la description**

- US 7582377 B2
- US 2004202907 A1